# EUROPÄISCHE PATENTSCHRIFT

(11) **EP 0 543 469 B1**
(45) Veröffentlichungstag und Bekanntmachung des Hinweises auf die Patenterteilung: **15.11.1995**
(21) Anmeldenummer: 92250274.5
(22) Anmeldetag: 25.09.1992
(51) Int. Cl.: B60R 16/02

(54) **Leitungssatz für das Bordnetz eines Kraftfahrzeuges**
Wire harness for a board network of a vehicle
Faisceau pour un réseau de bord d'une automobile

(30) Priorität: 21.11.1991 DE 4138714
(43) Veröffentlichungstag der Anmeldung: 26.05.1993
(73) Patentinhaber: SIEMENS AKTIENGESELLSCHAFT, 80333 München (DE)
(72) Erfinder: Liedtke, Rüdiger, W-2930 Dangast (DE); Witzke, Wilfried, W-8400 Regensburg (DE)

(56) Entgegenhaltungen:
- EP-A- 0 235 922
- EP-A- 0 235 924
- EP-A- 0 284 488
- EP-A- 0 418 882
- FR-A- 2 569 911
- GB-A- 2 203 598

## Beschreibung

Die Erfindung liegt auf dem Gebiet der elektrischen Ausrüstung von Kraftfahrzeugen und ist bei der konstruktiven Ausgestaltung und Herstellung eines Leitungssatzes anzuwenden, der in einteiliger Ausgestaltung das gesamte Bordnetz im Bereich der Karosserie eines Kraftfahrzeuges bildet.

Die elektrischen und elektronischen Komponenten in einem Kraftfahrzeug, insbesondere in Personenkraftwagen, sind untereinander durch einen sogenannten Leitungssatz (Kabelbaum), verbunden, der aus einer Vielzahl von isolierten elektrischen Leitern/Adern besteht. Diese Adern sind zu Stämmen und Ästen gebündelt; dabei sind die Adern an den Enden der Äste mit Steckverbindungen zum Anschluß der Komponenten sowie spezieller Teil-Leitungssätze (insbesondere zur Versorgung der Türen und der Sitze) versehen. Es ist hierbei üblich, entweder einen einzigen, die vollständige Verdrahtung für den Bereich der Karosserie (das sind der Instrumenten- und Bodengruppenbereich, der Heck- und Dachbereich sowie der Motorraum) enthaltenden, einteilig vorgefertigten Leitungssatz (EP-A1-0 441 511) oder mehrere Teil-Leitungssätze (EP-A1-0 235 922) zu verwenden. Im ersten Fall können sich bei Herstellung und Installation eines umfangreichen Leitungssatzes Schwierigkeiten bei der Handhabung ergeben, im zweiten Fall sind zusätzliche Steckverbindungen zur Verbindung der Teil-Leitungssätze untereinander erforderlich.

Um Leitungssätze für das Bordnetz von Kraftfahrzeugen leichter handhaben zu können, ist es bekannt, einzelne Teilstränge des Leitungssatzes durch Umspritzen mit einem Kunststoff formstabil auszubilden. Dabei können zwischen einzelnen Teilabschnitten gelenkige Verbindungsstellen vorgesehen sein, die von Schlauchstücken gebildet sind (EP-A-0 235 924). Zur Reduzierung des Montageaufwandes für Kabelbäume ist es weiterhin bekannt, Leiterrahmen zu verwenden, in welche Teilabschnitte des Kabelbaums eingelegt sind. Diese Leiterrahmen sind mit Befestigungselementen zur Fixierung der Leiterrahmen an der Karosserie des Kraftfahrzeuges versehen (DE-Z "Kunststoffe", 76 (1986) 12, Seite 1230/DE 35 45 517). Eine andere bekannte Maßnahme sieht vor, einen aus einem Stammbereich und Ästen bestehenden Kabelbaum in einen Formkörper aus Kunststoff ortsfest und wasserdicht einzubetten, wobei der Formkörper in vorgefertigten Montagebereichen aus festen Kunststoffen mit geringer Elastizität und in Sollbiegebereichen aus weichen Kunststoffen mit hoher Elastizität gefertigt ist (EP-B-0 288 752/DE 37 10 642). Ein praktisches Ausführungsbeispiel hierfür sieht vor, den unterhalb des Armaturenbretts eines Sportwagens geführten Hauptkabelsatz mit Polyurethan zu umschäumen und durch Variation der Schaumaushärtung Bereiche definierter Nachgiebigkeit zu schaffen (DE-Z "Automobil-Produktion", Febr. 1990, Seiten 36/37).

Um eine Kabelanordnung für das elektrische Bordnetz eines Kraftfahrzeuges mit einem Handhabungsautomaten in karosserieseitige Vertiefungen einlegen zu können, ist es weiterhin bekannt, ein formstabiles Auskleidungsteil des Fahrzeuges, insbesondere die Bodenmatte, als Träger für die elektrischen Leitungen zu verwenden. Diese können dabei in einen Schaumstoffkörper eingebettet sein, der mit Versteifungen versehen ist (DE 33 37 596). - Man kann aber auch den Schaumstoffkörper der Bodenmatte mit offenen Kanälen versehen, die nach dem Einlegen von zu einem Kabelbaum gebündelten Adern mechanisch verschlossen werden (GB-A-2 203 598).

Ausgehend von einem Leitungssatz mit den Merkmalen des Oberbegriffes des Patentanspruches 1 liegt der Erfindung die Aufgabe zugrunde, die Bündelung der isolierten Leiter wenigstens in Teilbereichen des Leitungssatzes so auszugestalten, daß der einbaufertige Leitungssatz leicht handhabbar und schnell montierbar ist.

Zur Lösung dieser Aufgabe ist gemäß der Erfindung vorgesehen, daß wenigstens die Stämme und Äste im Bodengruppen- und Instrumentenbereich in ein kanalartiges Trägersystem aus formstabilen Trägerelementen und aus flexiblen Verbindungselementen eingelegt sind, daß die Trägerelemente im Bodengruppenbereich mit einer äußeren Polsterung versehen sind und daß ein Teil der Trägerelemente mit einem Verkleidungsteil für den Innenraum des Kraftfahrzeuges verbunden ist.

Ein derart umhüllter Leitungssatz kann einfach, schnell und paßgenau in die Karosserie eines Kraftfahrzeuges eingebaut werden. Das mit formstabilen Trägerelementen des Trägersystems verbundene Verkleidungsteil dient dabei als Träger für den kompletten Leitungssatz, der mittels der flexiblen Verbindungselemente und/oder aufgrund seiner eigenen Flexibilität gliederartig so zusammengelegt werden kann, daß alle übrigen Abschnitte des Leitungssatzes an dem Verkleidungsteil anliegen. Auch ein sehr umfangreiches einteiliges Gesamtbordnetz läßt sich bei dieser Ausgestaltung des Leitungssatzes ohne Schwierigkeiten handhaben. Die Möglichkeit des gliederartigen Zusammenlegens oder Zusammenklappens der einzelnen Abschnitte des Leitungssatzes kommt besonders dann zum Tragen, wenn auch die Stämme und Äste im Heck- und Dachbereich und/oder im Motorraum in ein kanalartiges Trägersystem eingelegt sind. Hierbei empfiehlt es sich, diejenigen Abschnitte des Leitungssatzes, die im eingebauten Zustand über eine Länge geradlinig verlaufen, die größer als die Länge oder die Breite des formstabilen Verkleidungsteiles ist, mit zwei oder mehr annähernd gleichlangen Trägerelementen mit jeweils einem zwischengeschalteten flexiblen Verbindungselement zu umhüllen. - Im nichteingebauten Zustand bildet der komplette Leitungssatz somit eine kompakte, gliederartig zusammengelegte Einheit, die leicht transportiert und gegebenenfalls mit einem Fertigungsautomaten in die Karosserie eingebracht werden kann, beispielsweise durch den Front- oder Heckscheibenausschnitt hindurch. Dabei sind die in das Trägersystem eingelegten Adern sowohl während als auch nach dem Einbau des Leitungssatzes in die Karosserie sicher gegen mechanische Beschädigung, insbesondere gegen Quetschen, geschützt. Da sich ein Abbinden der gebündelten Adern nach dem Einlegen in das Trägersystem erübrigt, können diese mit einer gewissen Überlänge in das Trägersystem eingelegt werden. Dies hat den Vorteil, daß beim Einbau des Leitungssatzes in die Karosserie auf die Steckverbindungen an den Enden der Äste des Leitungssatzes keine Zugkräfte wegen evtl. zu kurzer Adern einwirken können. Im übrigen entfallen bei einem solchen formintegrierten Gesamtbordnetz die sogenannten Inline-Verbinder, die für ein aus mehreren Teil-Leitungssätzen aufgebautes Bordnetz erforderlich sind. - Als Trägerelemente und Verbindungselemente werden zweckmäßig solche kanalartigen Teile eingesetzt, die nach dem Einlegen der Adern verschließbar und wieder öffnenbar sind. Dadurch ist der Leitungssatz auch für Nachrüst- oder Reparaturfälle zugänglich. Die Trägerelemente können dabei zugleich als Abdeckungen im Fahrzeug verwendet werden und gegebenenfalls als Abschirmung gegen elektromagnetische Einflüsse ausgebildet sein.

Zweckmäßig ist wenigstens der überwiegende Anteil der formstabilen Trägerelemente des Trägersystems im wesentlichen geradlinig verlaufend ausgebildet, während flexible Verbindungselemente an Stellen angeordnet sind, an denen der Leitungssatz im eingebauten Zustand eine Abwinkelung aufweist. In diesem Fall kann die Geometrie des Leitungssatzes durch paßgerechte Auslegung der Trägerelemente an die Blechkonturen der Karosserie angepaßt werden, was zu einer weiteren Verkürzung der Einbauzeit und zu einer lagerichtigen Zuordnung der Steckverbinder zu den elektrischen und elektronischen Komponenten führt.

Um die unterschiedlichen Einbaubedingungen des Leitungssatzes in den verschiedenen Bereichen des Kraftfahrzeuges in zweckmäßiger Weise zu berücksichtigen, empfiehlt es sich, die formstabilen Trägerelemente hinsichtlich ihrer äußeren Gestaltung an die verschiedenen Bereiche des Kraftfahrzeuges speziell anzupassen, beispielsweise bezüglich einer definierten akkustischen Abstimmung oder einer designartigen Ausgestaltung im Sichtbereich. Dies gilt auch für die Art der örtlichen Fixierung der Trägerelemente. Im Motorraum- und Dach-/Heckbereich sind die Trägerelemente zweckmäßig mit Befestigungselementen ausgerüstet, mit denen die Trägerelemente direkt an der Karosserie befestigt werden können. Dies bietet die Möglichkeit, das Trägersystem beim Ausklappen der zunächst an dem Verkleidungsteil zusammengelegten Trägerelemente diese Schritt für Schritt zu fixieren. Die Anpassung an die speziellen Einbaubereiche sollte auch berücksichtigen, daß im Bereich von Durchgängen in der Karosserie, in der Spritzwand zum Motorraum oder in der Schottwand zum Gepäckraum sowohl die Trägerelemente als auch die flexiblen Verbindungselemente mit geschlitzten Durchführungstüllen versehen sein können. Im Bodengruppenbereich, also im Fußraum der Innenzelle empfiehlt es sich dagegen, die Trägerelemente mit einer Polsterung aus Dämmmaterial, beispielsweise mit Schaumstoff oder einem filz- oder faserartigen Material zu umgeben oder in entsprechende Teile einzulegen. Dabei besteht die Möglichkeit, die Auflageflächen der Polsterung exakt der Kontur des Bodenbleches anzupassen, so daß eine provisorische Fixierung der umpolsterten Trägerelemente mittels Kleber (z.B. selbstklebende Klebefläche) möglich ist. Die endgültige Fixierung der Trägerelemente erfolgt dann beim Auslegen der Bodenmatte, die entsprechende Aussparungen für die Trägerelemente aufweist.

Die Trägerelemente im Instrumenten-, Bodengruppen- und Dach-/Heckbereich können aus recyclebaren Materialien wie Preßpappe, Kunststoffen oder auch aus Blechen bestehen. Für den Motorraumbereich ist zusätzlich darauf zu achten, daß das Trägersystem spritzwasserdicht und temperaturbeständig ausgebildet ist, wobei an den Enden und Abzweigungen Dichtungen vorzusehen sind, beispielsweise mit geschlitzten Durchführungen versehene gummiartige Dichtstücke oder Dichtkappen. Die Abgänge der einzelnen Adern zu den Steckverbindern können in Schläuche eingezogen oder dicht umwickelt sein. - Zur Verbindung von Trägerelementen im Motorraum werden zweckmäßig gummiartige Verbindungsstücke eingesetzt, auf die die Enden der zu verbindenden Trägerelemente beidseits aufsteckbar sind. Um Trägerelemente, die auf diese Weise verbunden sind, gliederartig zusammenlegen zu können, ist zuvor die Steckverbindung zu lösen.

Bei dem für den Transport und das Einbringen des Leitungssatzes in das Kraftfahrzeug verwendeten Verkleidungsteil handelt es sich entweder um ein formstabiles Teil wie das Instrumentenbrett bzw. dessen Träger oder das großflächige Dämmteil der oberen Spritzwand oder auch die Kofferraum-Verkleidung oder um die relativ stabile vordere Bodenmatte, so daß entweder die Trägerelemente im Instrumenten- oder Heckwandbereich oder die Trägerelemente für den Bodengruppenbereich oder auch Trägerelemente verschiedener Bereiche ganz oder teilweise mit dem Verkleidungsteil eine montagestabile Einheit bilden. Hierbei können die entsprechenden Trägerelemente in Aussparungen des Verkleidungsteils eingelegt oder eingeklemmt sein oder sie können mit dem Verkleidungsteil umgeben, z.B. umschäumt sein oder das Verkleidungsteil enthält selbst Kanäle oder kanalartige Elemente, die geöffnet und wieder geschlossen werden können und in die die Adern des Leitungssatzes bei dessen Erstellung eingelegt werden. Dies kommt insbesondere bei Verwendung der vorderen Bodenmatte als formstabiler Träger für den Leitungssatz in Betracht. Da um den vorderen Sitzbereich eines Personenkraftwagens umfangreiche Abschnitte des Bordnetzes angeordnet sind (z.B. Instrumentenbereich samt A-Säulen, vordere Schweller bis zur B-Säule, vorderer Konsolenbereich und Sitzverstellung) ist die Integration der Trägerelemente dieses Teiles des Leitungssatzes in das formstabile Verkleidungsteil besonders vorteilhaft. Mit dem Einbringen der vorderen Bodenmatte in die Karosserie werden nämlich zugleich zahlreiche Steckverbindungen in die richtige Einbaulage gebracht und brauchen dann nur noch an kurzen Abgängen gesteckt oder ausgelegt zu werden. - Bei Verwendung eines Verkleidungsteiles aus dem Instrumentenbereich dienen die ohnehin vorhandenen Befestigungselemente dieses Verkleidungsteiles zugleich der Fixierung des hierin integrierten Teils des Trägersystems und damit der entsprechenden Abschnitte des Leitungssatzes.

Ein Ausführungsbeispiel des neuen Leitungssatzes ist in den Figuren 1 bis 7 schematisch dargestellt. Dabei zeigt
- Figur 1: das Trägersystem für einen solchen Leitungssatz, die
- Figuren 2,3 und 4: spezielle Ausgestaltungen der Trägerelemente in vergrößerter Darstellung,
- Figur 5: die Verbindung eines Trägersystems gemäß Figur 1 mit einer vorderen Bodenmatte und die
- Figuren 6 und 7: einen vergrößerten Ausschnitt zweier Querschnittsdarstellungen bezüglich der Einbettung formstabiler Trägerelemente in eine Bodenmatte.

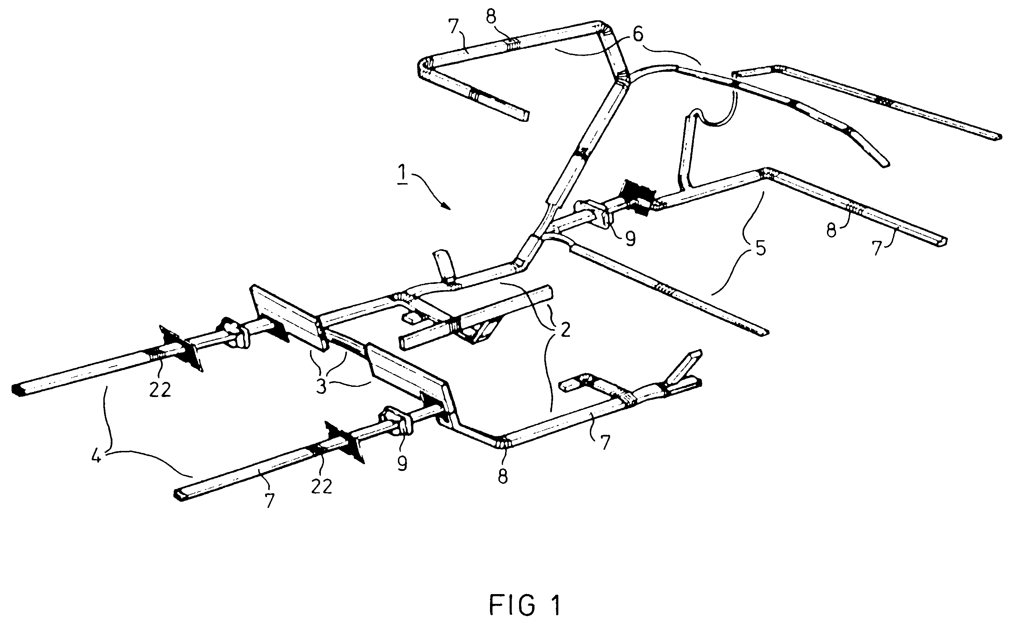

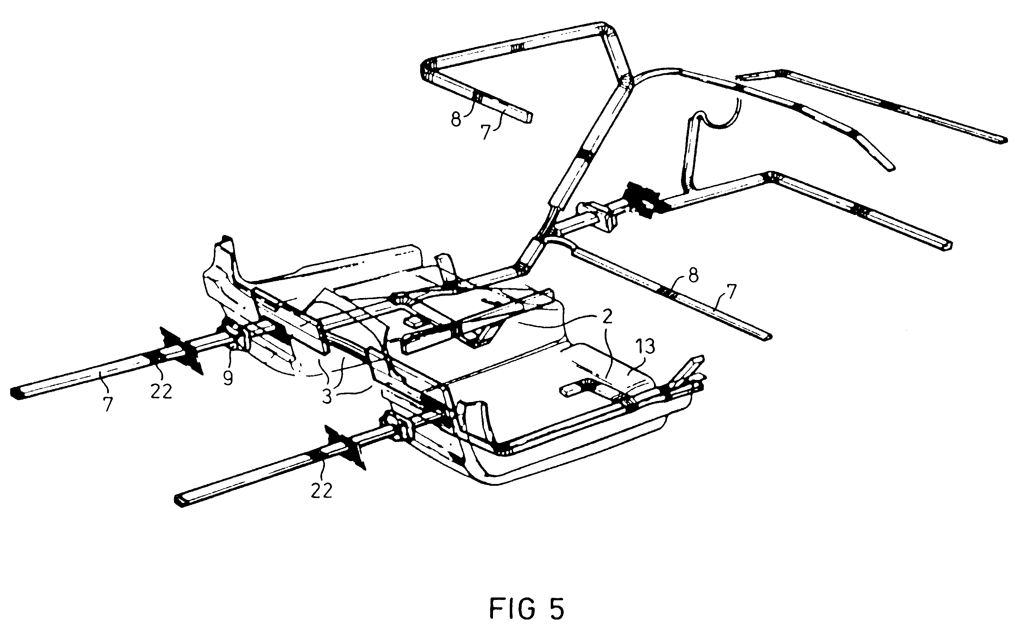

Das in Figur 1 dargestellte Trägersystem 1 für die nicht näher dargestellten isolierten Leiter eines Leitungssatzes, der alle der Karosserie eines Pkw zugeordneten Bereiche erfaßt, ist in einem Zustand dargestellt, wie er nach dem Einbau in die Karosserie gegeben ist. Das Trägersystem 1 besteht dabei aus vier Teilsystemen, von denen das Teilsystem 2 dem Bodengruppenbereich, das Teilsystem 3 dem Instrumentenbereich, das Teilsysstem 4 dem Motorraum, das Teilsystem 5/6 dem Heck- und dem Dachbereich zugeordnet ist. Für das Trägersystem sind formstabile, im wesentlichen geradlinig verlaufende Trägerelemente 7 und flexible Verbindungselemente 8 verwendet, wobei an Durchgängen in der Spritzwand zum Motorraum und in der Schottwand zum Gepäckraum Durchführungstüllen 9 vorgesehen sind. Diese Tüllen können vorkonfektioniert aufgebracht sein.

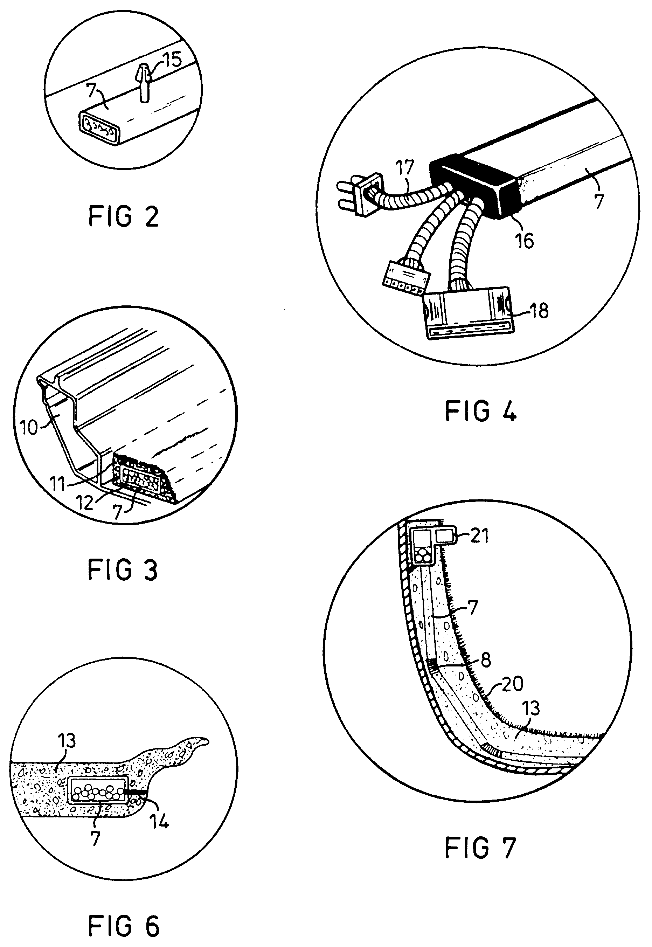

Gemäß Figur 2 sind die Trägerelemente 7, insbesondere diejenigen für den Motorraum 4 und den Heck- und Dachbereich 5/6 mit Befestigungselementen 15 versehen, die in entsprechende Bohrungen in der Karosserie einrastbar sind. Diese Trägerelemente sollten möglichst flach ausgebildet sein, damit sie raumsparend eng an der Karosserie anliegen können.

Gemäß Figur 3 können im Bodenbereich 2 des Kraftfahrzeuges beispielsweise längs eines Schwellers 10 angeordnete formstabile Trägerelemente 7 in einen Schaumstoffstrang 11 eingebettet oder von einem Schaustoffstrang 11 umgeben sein, dessen Außenkontur den speziellen Einbaubedingungen angepaßt ist. - Im Trägerelement 7 sind die eingelegten Adern 12 schematisch angedeutet.

Gemäß Figur 4 ist an dem Ende eines Trägerelementes 7, das zum Motorraumbereich 4 gehört, ein Dichtstück 16 angeordnet, durch das einzelne Leiterstränge herausgeführt sind. Diese sind mit einer Dichtwicklung 17 umgeben und führen zu den Steckverbindern 18, mit denen der Leitungssatz in diesem Bereich des Kraftfahrzeuges insbesondere an die Beleuchtungsaggregate angeschlossen wird.

Gemäß Figur 5 ist dem in Figur 1 dargestellten Trägersystem ein Verkleidungsteil für den Innenraum des Kraftfahrzeuges zugeordnet. Dabei handelt es sich um die relativ formstabile vordere Bodenmatte 13, die im vorderen Bereich hochgezogen ist. In diese Bodenmatte sind die Trägerteilsysteme 2 und 3 für den Bodengruppenbereich und den Instrumentenbereich integriert, wobei die Bodenmatte insgesamt einen formstabilen Träger für das gesamte Trägersystem einschließlich der darin verlegten Adern bildet. Das Trägersystem kann unter Ausnutzung der flexiblen Verbindungselemente 8 und der steckbaren Verbindungselemente 22 gliederartig zusammengefaltet und auf die Bodenmatte 13 aufgelegt werden.

Gemäß Figur 6 ist eine Integration der Trägerelemente 7 des Bodenbereiches 2 dadurch vorgenommen, daß diese Trägerelemente in Kanäle des Schaumstoffkörpers der Bodenmatte 13 eingelegt sind, wobei diese Kanäle mittels eines Klettverschlusses 14 öffnenbar sind.

Gemäß Figur 7 ist die Bodenmatte 13, die an ihrer Oberfläche mit einem Teppich 20 versehen ist, im Bodenbereich so weit hochgezogen, daß sie auch gegen die Spritzwand 19 der Karosserie anliegt und in ihrem oberen Bereich die Elemente des Teilsystems für den Instrumentenbereich aufnimmt. Hierbei bestehen die formstabilen Trägerelemente aus kastenartigen Gehäuseteilen 21, die gegebenenfalls auch Abwinkelungen enthalten und in denen einerseits die Adern des Leitungssatzes verlaufen und andererseits auch Sockel zur Aufnahme von Sicherungen und Relais angeordnet sein können.

Bei den für das Trägersystem verwendeten formstabilen Trägerelementen 7 handelt es sich zweckmäßig um im Querschnitt rechteckige Hohlprofile, die mit einem abnehmbaren oder klappbaren Deckel versehen sind. Bei den flexiblen Verbindungselementen 8 handelt es sich ebenfalls um kanalartige, durch eine entsprechende Wellung jedoch flexibel ausgebildete Formteile, die in Längsrichtung geschlitzt sind, wobei die Schlitzkanten aufgrund der Flexibilität der Verbindungselemente elastisch gegeneinander stoßen oder einander überlappen.

## Patentansprüche

1. Einteilig vorgefertigter Leitungssatz für das Bordnetz eines Kraftfahrzeuges,
bestehend aus einer Vielzahl von zu Stämmen und Ästen gebündelten isolierten Leitern, wobei die isolierten Leiter an den Enden der Äste mit Steckverbindungen zum Anschluß der elektrischen Komponenten des Kraftfahrzeuges im Instrumentenbereich, im Bodengruppenbereich, im Heck- und Dachbereich sowie im Motorraum versehen sind,
**dadurch gekennzeichnet,**
daß wenigstens die Stämme und Äste im Instrumenten- und Bodengruppenbereich (3,2) in ein kanalartiges Trägersystem (1) aus formstabilen Trägerelementen (7) und flexiblen Verbindungselementen (8) eingelegt sind,
daß die Trägerelemente (7) im Bodengruppenbereich (2) mit einer Polsterung (11,13) versehen sind
und daß ein Teil der Trägerelemente (7) mit einem Verkleidungsteil (13) für den Innenraum des Kraftfahrzeuges verbunden ist.

2. Leitungssatz nach Anspruch 1,
**dadurch gekennzeichnet,**
daß auch die Stämme und Äste im Heck- und/oder Dachbereich (5,6) und/oder im Motorraum (4) in ein kanalartiges Trägersystem eingelegt sind,
wobei die Trägerelemente im Heck- und Dachbereich mit Befestigungselementen (15) zur direkten Befestigung der Trägerelemente an der Karosserie versehen sind,
wobei die Trägerelemente im Motorraum spritzwasserdicht ausgebildet, an den Enden, Abwinkelungen und Abzweigungen mit Dichelementen (16) versehen und im übrigen mit Befestigungselementen (7) zur direkten Befestigung der Trägerelemente an der Karosserie versehen sind und wobei Trägerelemente und flexible Verbindungselemente im Bereich von Durchgängen in der Karosserie, in der Spritzwand zum Motorraum oder in der Schottwand zum Gepäckraum mit Durchführungstüllen (9) versehen sind.

3. Leitungssatz nach Anspruch 1 oder 2,
**dadurch gekennzeichnet,** daß der überwiegende Anteil der formstabilen Trägerelemente im wesentlichen geradlinig verlaufend ausgebildet ist und daß flexible Verbindungselemente (8) an Stellen angeordnet sind, an denen der Leitungssatz im eingebauten Zustand eine Abwinkelung aufweist.

4. Leitungssatz nach einem der Ansprüche 1 bis 3,
**dadurch gekennzeichnet,**
daß Abschnitte des Leitungssatzes, die im eingebauten Zustand über eine Länge geradlinig verlaufen, die größer als die Länge oder die Breite des Verkleidungsteiles ist, von zwei oder mehr annähernd gleichlangen Trägerelementen mit jeweils einem zwischengeschalteten flexiblen Verbindungselement umhüllt sind.

5. Leitungssatz nach einem der Ansprüche 1 bis 4,
**dadurch gekennzeichnet,**
daß Trägerelemente (7) mit einem Verkleidungsteil (13) im Instrumenten- und/oder Bodengruppenbereich (2,3) verbunden sind.

6. Leitungssatz nach Anspruch 5,
**dadurch gekennzeichnet,**
daß das Verkleidungsteil (13) mit kanalartigen Aussparungen zur Aufnahme von Trägerelementen (7) versehen ist.

7. Leitungssatz nach Anspruch 5,
**dadurch gekennzeichnet,**
daß in das Verkleidungsteil Trägerelemente integriert sind.

## Claims

1. A single-piece prefabricated wiring harness for the wiring system of a motor vehicle, comprising a plurality of insulated wires bundled to form trunks and branches, the insulated wires being provided at the ends of the branches with plug connections for connecting the electrical components of the motor vehicle in the instrument region, in the floor group region, in the rear and roof region and in the engine chamber, characterised in that at least the trunks and branches in the instrument and floor group region (3, 2) are laid in a duct-like support system (1) made of inherently stable support elements (7) and flexible connecting elements (8), the support elements (7) in the floor group region (2) are provided with a cushioning (11, 13) and one part of the support elements (7) is connected to a lining element (13) for the interior of the motor vehicle.

2. A wiring harness according to claim 1, characterised in that the trunks and branches in the rear and/or roof region (5, 6) and/or in the engine chamber (4) are also laid in a duct-like support system, the support elements in the rear and roof region being provided with securing elements (15) for securing the support elements directly to the car body, the support elements in the engine chamber being splash-proof, being provided at their ends, corners and branches with sealing elements (16) and otherwise with securing elements (7) for securing the support elements directly to the car body, the support elements and flexible connecting elements being provided with grommets (9) in the region of openings in the car body, from the dashboard to the engine chamber or from the partition to the car boot.

3. A wiring harness according to claim 1 or 2, characterised in that the majority of the inherently stable support elements extend substantially linearly and flexible connecting elements (8) are provided at sites where the wiring harness bends in its fitted state.

4. A wiring harness according to one of claims 1 to 3, characterised in that sections of the wiring harness, which in the fitted state extend linearly over a distance which is greater than the length or width of the lining element, are enclosed by two or more support elements of approximately equal length, each comprising an interposed flexible connecting element.

5. A wiring harness according to one of claims 1 to 4, characterised in that the support elements (7) are connected to a lining element (13) in the instrument and/or floor group region (2, 3).

6. A wiring harness according to claim 3, characterised in that the lining element (13) is provided with duct-like recesses for accommodating support elements (7).

7. A wiring harness according to claim 5, characterised in that support elements are integrated in the lining element.

## Revendications

1. Faisceau de conducteurs préfabriqué d'un seul tenant pour le réseau de bord d'un véhicule automobile, constitué d'une multipicité de conducteurs isolés, réunis en faisceau de manière à former des troncs et des branches, les conducteurs isolés comportant, aux extrémités des branches, des connecteurs pour le raccordement des composants électriques du véhicule automobile de la zone des instruments, de la zone de l'ensemble de plancher, de la zone arrière et de la zone du toit ainsi que dans l'espace moteur,
caractérisé par le fait
qu'au moins les troncs et les branches de la zone des instruments et de la zone de l'ensemble de plancher (3,2) sont insérés dans un système de support (1) en forme de canal constitué d'éléments porteurs (7) indéformables et d'éléments de liaison (8) souples,
que les éléments porteurs (7) comportent, dans la zone (2) de l'ensemble de plancher, un rembourrage (11,13), et qu'une partie des éléments porteurs (7) est reliée à une partie d'habillage (13) de l'espace intérieur du véhicule automobile.

2. Faisceau de conducteurs suivant la revendication 1, caractérisé par le fait
que les troncs et les branches de la zone arrière et/ou de la zone de toit (5,6) et/ou de l'espace moteur (15), sont aussi insérés dans un système de support en forme de canal,
les éléments porteurs de la zone arrière et de la zone de toit étant équipés d'éléments de fixation (15) pour la fixation directe des éléments porteurs à la carrosserie,
les éléments porteurs de l'espace moteur étant agencés de manière à être étanches aux projections d'eau et étant pourvus d'éléments d'étanchéité (16) aux extrémités, aux coudes et aux dérivations et étant pourvus par ailleurs d'éléments de fixation (7) pour la fixation directe des éléments porteurs à la carrosserie, tandis que des éléments porteurs et des éléments de liaison souples sont équipés de douilles de traversée (9) dans la zone de passages ménagés dans la carrosserie, dans la paroi de protection de l'espace moteur contre les projections et/ou dans la cloison de séparation par rapport au coffre à bagages.

3. Faisceau de conducteurs suivant la revendication 1 ou 2, caractérisé par le fait que la majeure partie des éléments porteurs indéformables sont réalisés de manière à avoir une forme sensiblement rectiligne et que des éléments de liaison (8) souples sont disposés en des emplacements, où le faisceau de conducteurs présente un coude à l'état monté.

4. Faisceau de conducteurs suivant l'une des revendications 1 à 3, caractérisé par le fait que des tronçons du faisceau de conducteurs, qui, à l'état monté, sont rectilignes sur une longueur qui est supérieure à la longueur ou la largeur de la partie d'habillage, sont entourées de deux ou d'un plus grand nombre d'éléments porteurs ayant une longueur approximativement identique et comportant chacun un élément souple de liaison interconnecté.

5. Faisceau de conducteurs suivant l'une des revendications 1 à 4, caractérisé par le fait que des éléments porteurs (7) sont reliés à une partie d'habillage (13) de la zone des instruments et/ou de la zone de l'ensemble de plancher (2,3).

6. Faisceau de conducteurs suivant la revendication 5, caractérisé par le fait que la partie d'habillage (13) est pourvue d'évidements en forme de canaux de réception d'éléments porteurs (7).

7. Faisceau de conducteurs suivant la revendication 5, caractérisé par le fait que les éléments porteurs sont intégrés à la partie d'habillage.
